# EUROPEAN PATENT APPLICATION

(11) **EP 4 640 466 A1**
(43) Date of publication of application: **29.10.2025**
(21) Application number: 25171991.0
(22) Date of filing: 23.04.2025
(51) Int. Cl.: B60K 15/05

(54) **FLAP FOR AN INLET OF A MOTOR VEHICLE**

(30) Priority: 24.04.2024 IT 202400009445
(71) Applicant: FERRARI S.p.A., 41100 Modena (IT)
(72) Inventor: ALNERI, Stefano, 41100 MODENA (IT); MORANZONI, Ivan, 41100 MODENA (IT); GUANDALINI, Roberto, 41100 MODENA (IT)
(74) Representative: Studio Torta S.p.A.

(57) **Abstract**

A flap (10) for a motor vehicle (1) is described, with a first element (21) that can be fixed to a body (2) and a second element (22) hinged to the first element (21) around a first axis (B); a shutter (15) carried by the second element (22) and movable relative to the first element (21) between a first closing position and a first complete opening position; and elastic means (30) interposed between the first element (21) and the second element (22) and configured to load the shutter (15) towards the first complete opening position; and slowing means (41, 100) configured to slow down the shutter (15) upon reaching of the first complete opening position; the slowing means (41, 100) comprise a cover (41) carried by one (21) of the first and second element (21, 22); and a surface (100) carried by the other (22) of said first and second element (21, 22); one of said cover (41) and surface (100) being made of a damping material; the cover and the surface (41, 100) interact with one another at least in the complete opening position so as to slow down the shutter (15) upon reaching of the first complete opening position.

## Description

### CROSS-REFERENCE TO RELATED APPLICATIONS

This patent application claims priority from Italian patent application no. 102024000009445 filed on April 24, 2024, the entire disclosure of which is incorporated herein by reference.

### TECHNICAL FIELD

The invention relates to a flap for an inlet of a motor vehicle.

More in detail, the flap is a fuel flap or a flap for a charging port of an electric motor vehicle.

### BACKGROUND

Motor vehicles comprise, in a known manner:
- a body defining a passenger compartment and two or more doors;
- a tank designed to contain fuel;
- a tank access port, which is designed to allow the tank to be filled; and
- a flap hinged to the body and movable between a closing position, in which it obstructs access to the port, and an opening position, in which it allows access to the port.

The motor vehicle further comprises:
- a hinge having a first element fixed to the body and a second element, which can rotate relative to the first element and is fixed to the flap;
- a spring interposed between the first element and the second element and designed to load the second element towards the opening position;
- a limit stop element made of an elastomer material and designed to stop the flap in the opening position; and
- locking means designed to hold the flap in the opening position.

The motor vehicle further comprises a closing mechanism designed to prevent the flap from moving to the opening position, when the lock is in a closed configuration, in which it prevents the doors from opening.

When the lock is moved to an open configuration, in which it allows the doors to open, the closing mechanism is deactivated.

At this point, users simply have to press on the flap in order to move the flap to the opening position under the action of the spring.

Flaps of the type described above have a tendency to bounce several times, following the abutment against the limit stop element, upon reaching of the opening position.

This phenomenon is due to the stiffness of the spring and to the hardness of the limit stop element.

In the automotive industry, the need is felt to contain as much as possible or even completely eliminate bounces upon reaching of the opening position, without increasing the force that users must exert upon the flap to place it in the closing position and without increasing the overall cost of the flap itself.

This need is similarly felt when the flap allows or forbids access to a charging port for a battery of an electric motor vehicle.

### SUMMARY

The object of the invention is to provide a flap for an inlet of a motor vehicle, which is capable of fulfilling at least one of the needs discussed above.

The aforesaid object is reached by the invention, as it relates to a flap for an inlet of a motor vehicle as defined in claim 1.

### BRIEF DESCRIPTION OF THE DRAWINGS

The invention will be best understood upon perusal of the following detailed description of two preferred embodiments, which is provided by way of non-limiting example, with reference to the accompanying drawings, wherein:
- figure 1 is a perspective view of a motor vehicle comprising a fuel flap according to the invention and arranged in a closing position;
- figures 2 to 4 show a sequence of movement of the flap of figure 1 from a respective closing position, to a respective partial opening position and to a complete closing positions;

- figure 5 is an exploded view of the flap of figures 1 to 4; and
- figures 6 to 8 are perspective views of the flap of figures 1 to 5 with cross sections along respective lines VI-VI; VII-VII and VIII-VIII of corresponding figures 2, 3 and 4;

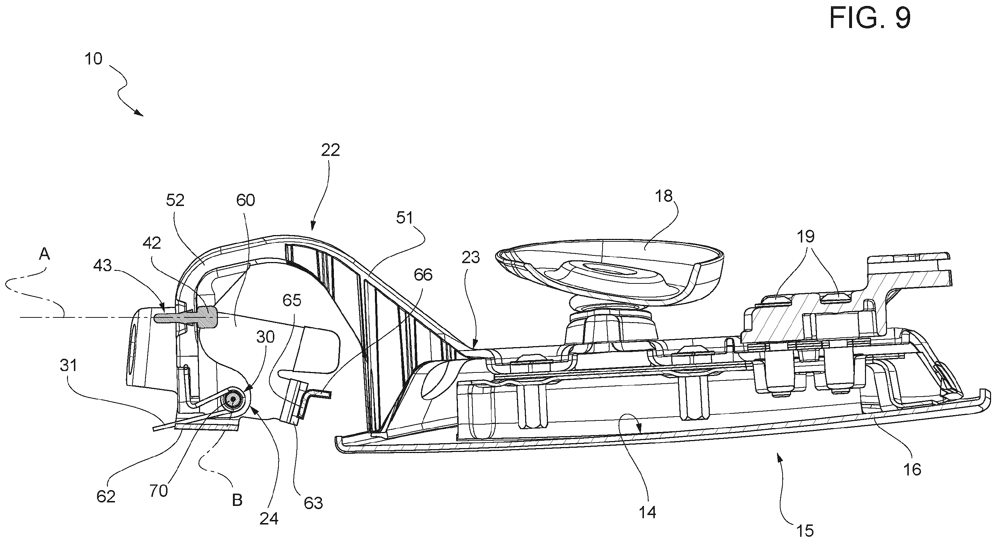

- figure 9 is a perspective view of the flap of figures 1 to 8 with a cross section along line VI-VI of figure 2 at a different visual angle;
- figures 10 and 11 show, in an enlarged perspective view, first details of the flap of figures 1 to 9;
- figures 12 and 13 show second details of the flap of figures 1 to 9, in the closing position and in the complete opening position, respectively; and
- figures 14 and 15 show the first components of the flap of figures 1 to 9, in a perspective view and according to line XV-XV of figure 8, respectively.

### DESCRIPTION OF EMBODIMENTS

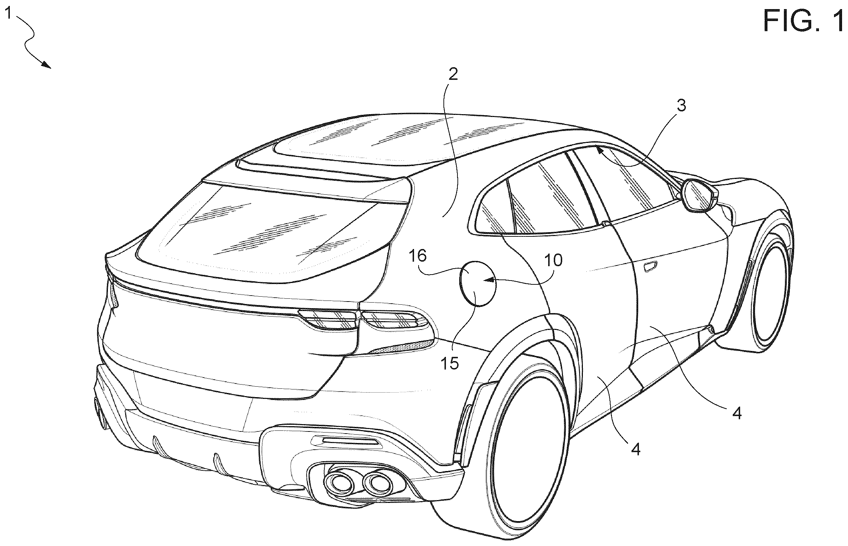

With reference to Figure 1, a motor vehicle 1 is shown, which basically comprises:
- a body 2 delimiting a passenger compartment 3;
- a plurality of doors 4 hinged to the body 2 and each movable between a respective opening position, in which they allow access to the body 2, and a respective closing position, in which they forbid access to the body 2;

- a tank (not shown) designed to be filled with fuel, defined by the body 2 and comprising a filling port 9; and
- a fuel flap 10.

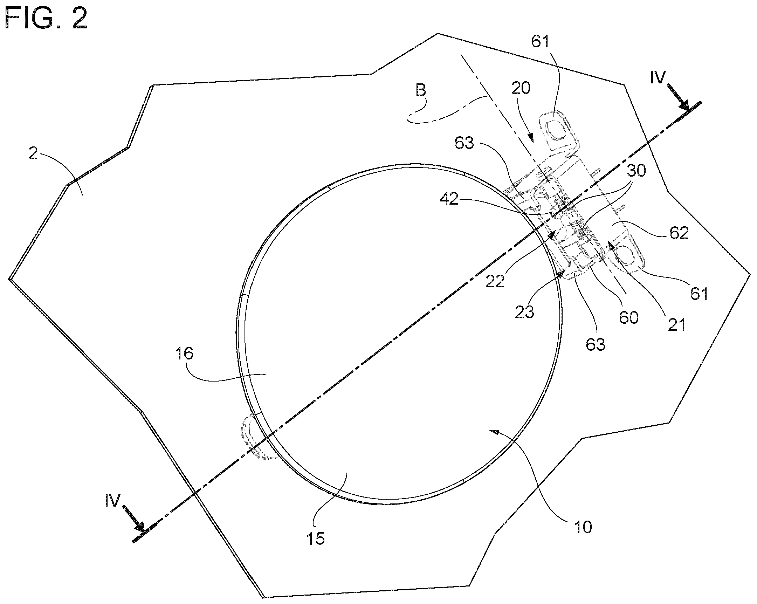

More in detail, the body 2 defines (Figures 2 to 4) an opening 6 and an access duct 7 accessing the filling port 9 and extending between the opening 6 and the filling port 9.

The flap 10 basically comprises:
- a shutter 15 hinged to the body 2 around an axis B; and
- a hinge 20 comprising an element 21 fixed to the body 2 and an element 22 capable of rotating relative to the element 21 around the axis B and fixed to the shutter 15.

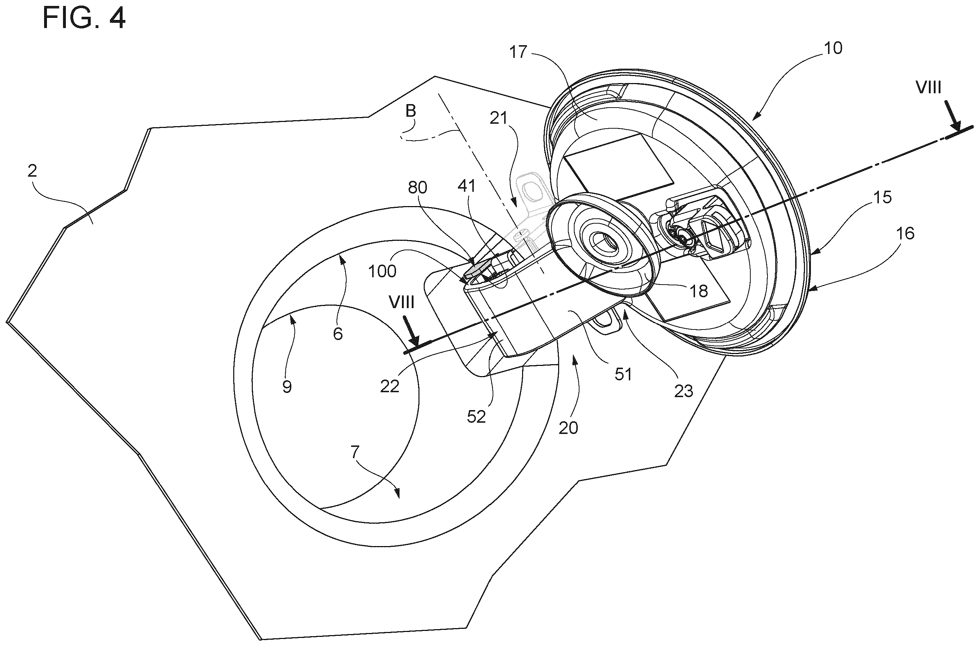

The shutter 15 can rotate around the axis B between:
- a closing position (Figure 2), in which it is arranged so as to cover the filling port 9; and
- a complete opening position (Figure 4), in which the filling port 9 is disengaged, so as to allow the tank to be filled.

In particular, the shutter 15 comprises, in turn:
- a wall 16 with a substantially circular shape and designed to strike against the opening 6 in the closing position of the shutter 15; and
- a wall 17 with the shape of a truncated cone extending from the wall 16 and designed to engage the duct 7 in the closing position of the shutter 15.

In particular, the wall 17 is tapered starting from the wall 16 and defines, with the wall 16, a compartment 14.

The shutter 15 further comprises:
- a suction cup 18 extending from the wall 17 on the side opposite the wall 16 and designed to be coupled to a connecting member, not shown, housed inside the duct 9; and
- a plurality of seats 19, which are housed inside the compartment 14 and are designed be coupled to respective movable connection elements, not shown, which can be moved inside the duct 9.

The flap 10 further comprises:
- a spring 30 interposed between the element 21 and the element 22 and configured to elastically pre-load the element 22 towards an opening position of the shutter 15; and
- a slowing assembly 40 configured to slow down the shutter 15 in the area of the complete opening position.

In the specific case shown herein, the spring 30 is a helical spring with axis B comprising a pair of end shanks 31, 32 opposite one another and fixed to respective elements 21, 22.

The motor vehicle 1 further comprises:
- a lock (also not shown), which can be moved between a closed configuration, in which it holds the doors 4 in the respective closed positions, and an open configuration, in which it allows the doors 4 to be moved between the respective closed positions and the respective open positions; and
- a closing mechanism (also not shown) controlled by the lock.

In particular, the closing mechanism is configured to hold the flap 10 in the closing position, when the lock is in the closed configuration, and to allow the flap 10 to move from the closing position to the opening position, when the lock is in the open configuration.

In short, the closing mechanism comprises a bolt that engages the seats 19 when the lock is in the closed configuration.

The assembly 40 advantageously comprises:
- a cover 41 carried by the element 21 of the hinge 20; and
- a surface 100 carried by the element 22 of the hinge 20;
the cover 41 and the surface 100 interact with one another at least in the complete opening position so as to slow down the shutter 15 upon reaching of said complete opening position.

More in detail, the cover 41 is made of a high-friction material and the surface 100 is made of a thermoplastic material.

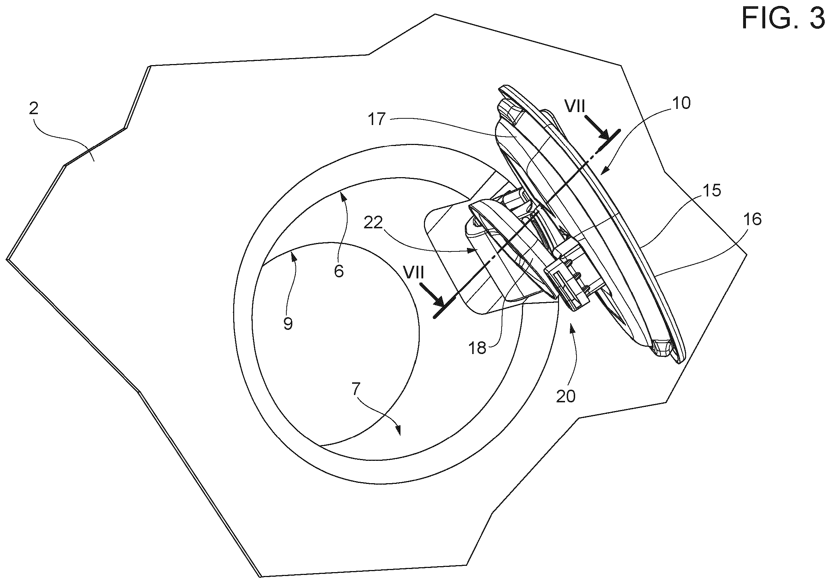

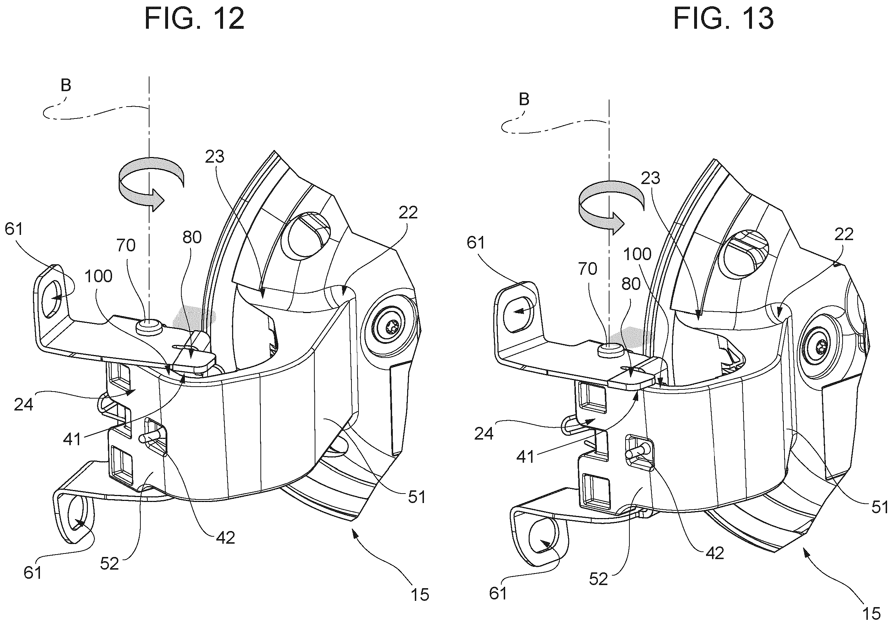

The shutter 15 can be moved from the closing position (figure 2) to the complete opening position (figure 4) along:
- a first rotation stroke around the axis B extending from the closing position (Figures 2 and 12) to an intermediate opening position (Figure 3); and
- a second rotation stroke around the axis B, immediately following the first stroke, from the intermediate opening position (Figure 3) to the complete opening position (Figures 4 and 13).

Along the first stroke, the cover 41 and the surface 100 are spaced apart from one another. In this way, the shutter 15 is not slowed down.

Along the second stroke, the cover 41 and the surface 100 are in contact with one another, so as to exert a slowing action upon the shutter 15 as it approaches the complete opening position.

More precisely, the first stroke comprises a first angular extension around the axis B that is greater than a second angular extension of the second stroke around the same axis B.

In the specific case shown herein, the first angular extension is eighty degrees.

The second angular extension is thirty degrees.

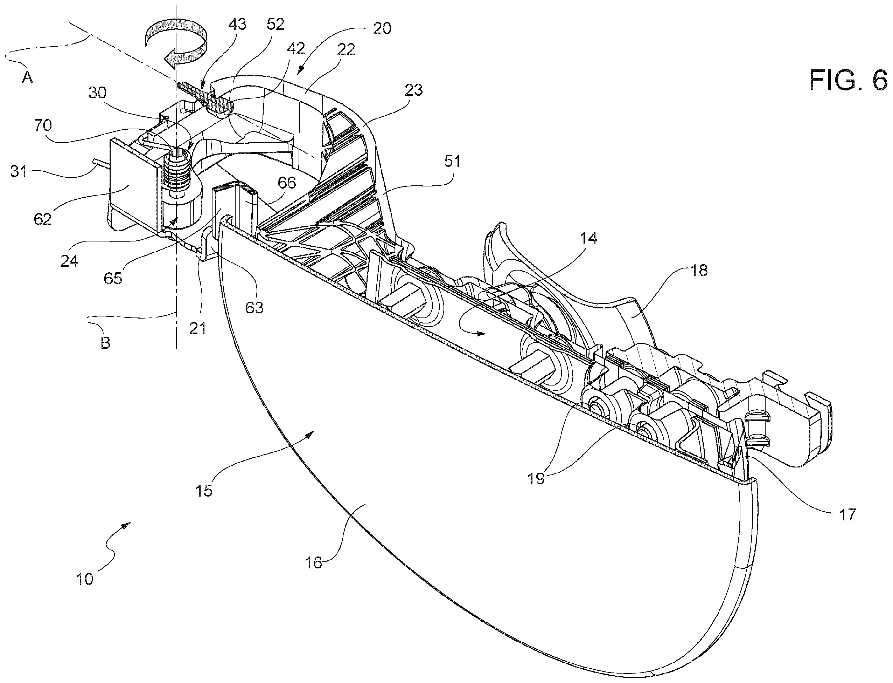

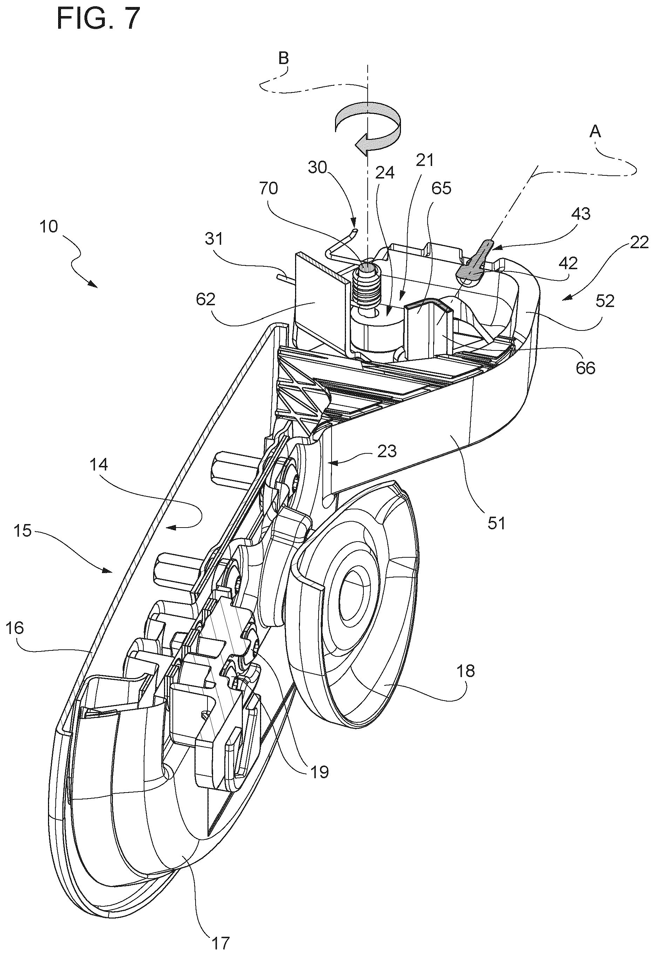

With reference to Figures 2 to 8, the element 22 protrudes from a circumferential edge 23 of the shutter 15 and comprises a free end 24 opposite the edge 23 and spaced from the shutter 15.

More in detail, the element 22 basically comprises:
- an arm 51 projecting from the edge 23 and tapered starting from the edge 23 itself; and
- a bent arm 52 extending between the arm 51 and the end 24; and
- the surface 100 defining an axial end of the element 22, with reference to the axis B.

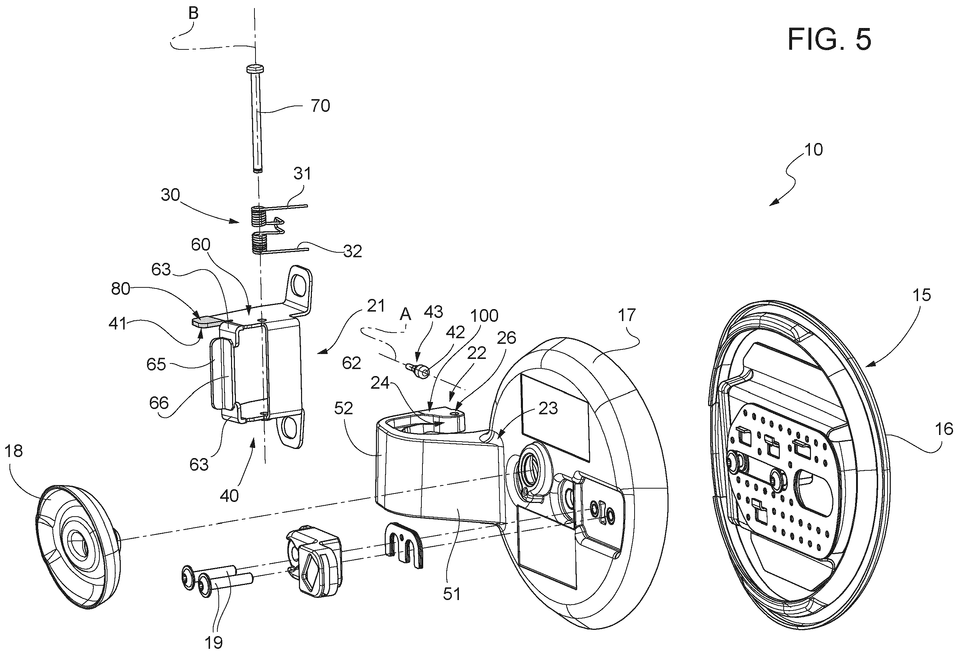

The end 24 defines a through seat 26 parallel to the axis B, which is visible in Figure 5.

The element 22 further comprises a pin 42 elongated along an axis A, which is orthogonal to the axis B, and going through both arms 51, 52.

The pin 42 is housed inside a seat 43 defined by the arm 52.

The pin 42 is made of an elastomer material and defines a limit stop for the shutter 15 in the complete opening position.

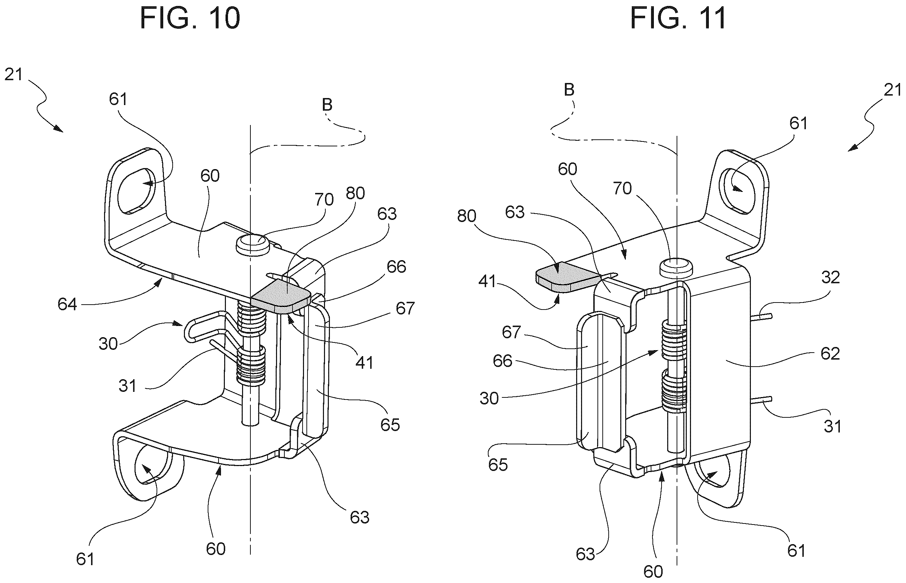

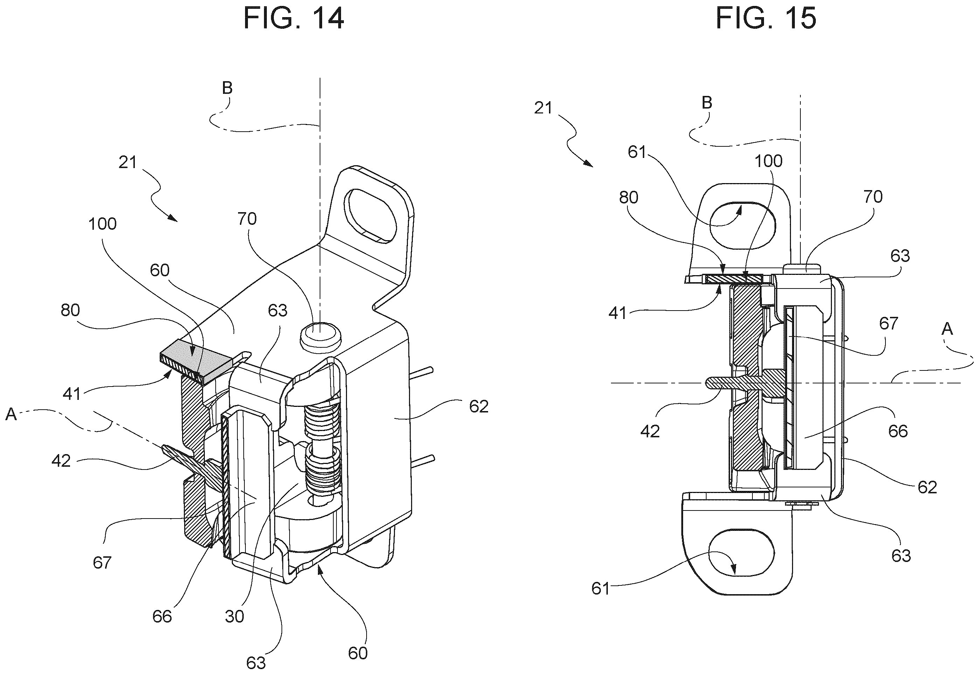

The element 21 (Figures 10, 11, 14 and 15) basically comprises:
- a pair of brackets 60 lying on respective planes orthogonal to the axis B, spaced apart from one another parallel to the axis B and fixed to the body 2 in the area of respective slots 61;
- a bracket 62 extending between the brackets 60 orthogonally to the brackets 60; and
- a pair of appendages 63 protruding from respective brackets 60 towards one another and lying on planes orthogonal to the brackets 60 and to the bracket 62.

The element 21 further comprises a surface 80 protruding from one of the brackets 60, orthogonal to the axis B and next to the respective appendage 63 (Figures 12 and 13).

The cover 41 is deposited on the surface 80. In particular, the cover 41 is a plasticized polyvinyl chloride containing a plasticizer, in the specific case discussed herein isononyl phthalate, and with Shore A hardness ranging from 25 to 90.

The element 21 further comprises a pair of walls 65, 66 having a common edge and lying on respective planes orthogonal to one another.

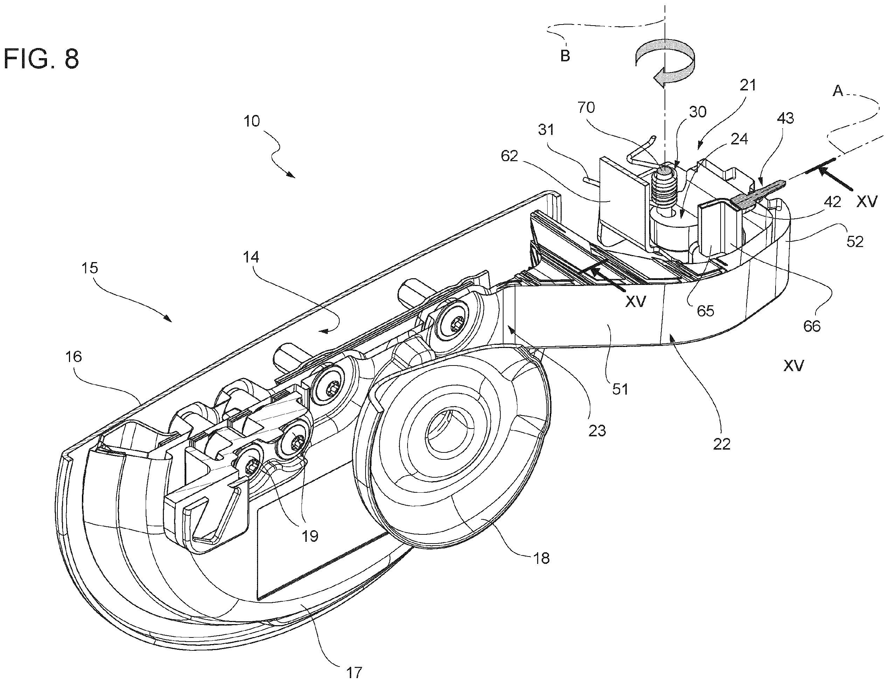

The walls 65, 66 contact the pin 42 upon reaching of the complete opening position, so as to determine a limit stop for the rotation of the shutter 15 around the axis B (Figure 8).

The wall 65 is orthogonal to the walls 62, 66. The wall 66 is parallel to the bracket 63 and orthogonal to the wall 62.

The wall 66 protrudes from the wall 65 on the side opposite the appendages 63.

The walls 65, 66 are connected to the appendages 63 and extend between the appendages 63 parallel to the axis B.

The element 21 finally comprises a pin 70 with axis B, relative to which the end 24 of the element 22 can rotate.

The pin 70 goes through the brackets 60.

The element 21 further defines a compartment 64 delimited between the brackets 60 parallel to the axis B and delimited by the walls 62, 65, 66 and by the brackets 63.

The spring 30 is wound on the pin 70. The shank 32 is fixed to the end 24 of the element 22 and the shank 31 is fixed to the bracket 62 of the element 21.

The end 54 of the arm 52 is housed inside the compartment 64 and the pin 70 is housed inside the seat 26 of the end 24.

The end 54 of the arm is housed inside the compartment 64 so that the surface 100 is in the area of the surface 80, with reference to the axis B.

The operation of the flap 10 is explained starting from a condition in which the lock is in the open configuration and the shutter 15 is arranged in the closing position, in which it is arranged so as to cover the filling port 9 (Figure 2).

In this condition, the suction cup 18 is coupled to the connecting member and the bolt leaves the seats 19 free.

In order to fill the tank with fuel, users press on the flap 10, so as to uncouple the suction cup 18 from the connecting member.

As a result, the spring 30 determines the rotation of the shutter 15 around the axis B from the closing position (Figure 2) to the partial opening position (Figure 3) along the first stroke and from the partial opening position (Figures 3 and 12) to the complete opening position (Figures 4 and 13) along the second stroke.

During said first and second strokes, the element 22 of the hinge 20 rotates in an integral manner with the shutter 15 around the axis B relative to the element 21 of the hinge 20 constrained to the body 2.

Consequently, the arms 51, 52, the surface 100 and the pin 42 carried by the element 22 rotate around the axis B relative to the surface 80 carried by the element 21 and provided with the cover 41.

More in detail, along the first stroke, the surface 100 remains angularly spaced apart from the surface 80 relative to the axis B.

In this way, the shutter 15 is not slowed down, but only elastically pushed towards the partial opening position.

Along the second stroke, the surface 100 contacts the cover 41 carried by the surface 80.

By so doing, a contact is generated between the thermoplastic material of the surface 100 and the material of the cover 41 (Figures 8 and 13).

This contact determines a damping action that slows down the shutter 15, causing it to stop in the complete opening position (Figure 4) without bouncing.

Upon reaching of the complete opening position, the pin 42 made of an elastomer material of the element 22 strikes against the surfaces 65, 66 of the element 21, thus determining a limit stop for the shutter 15.

At this point, the filling port 9 is fully accessible to users, who can refuel.

Once the filling is complete, users manually rotate the shutter 15 from the complete opening position, around the axis B, to the closing position against the action of the spring 30 until the suction cup 18 is locked with the connecting member.

The disclosure above reveals evident advantages that can be obtained with the invention.

In particular, along the second stroke from the partial opening position to the complete opening position, the surface 100 of the element 22 contacts the cover 41 carried by the surface 80 of the element 21

The contact between the thermoplastic material of the surface 100 and the high-friction material of the cover 41 (Figure 8) determines a damping action that slows down the shutter 15, causing it to stop in the complete opening position (Figures 4 and 8) without bouncing.

It is thus possible to achieve an automatic and completely controlled movement of the flap 10 up to the complete opening position, without requiring additional efforts on the part of the user during the movement from the complete opening position to the closing position.

Finally, the motor flap 10 according to the invention can be subjected to changes and variations, which, though, do not go beyond the scope of protection set forth in the appended claims.

In particular, the motor vehicle 1 could be of the electric type and the flap 10 could allow access to an electric charging port instead of the filling port 9 of the tank.

The cover 41 made of a high-friction material could be carried by the element 22 of the hinge 20 and the surface 100 could be carried by the element 21 of the hinge 20. The flap 10 could comprise, instead of the suction cup 18 and the connecting member, an electrically operated connection system.

## Claims

1. A flap (10) designed to obstruct the access to an inlet (9) of a motor vehicle (1), comprising:
- a hinge (20) comprising a first element (21), which can be fixed to a body (2) of said motor vehicle (1), and a second element (22), which is hinged to said first element (21) around a first axis (B); and
- a shutter (15) carried by said second element (22) and movable relative to said first element (21) between:
a first closing position, in which it obstructs, in use, the access to said inlet (9); and
a first complete opening position, in which it enables, in use, the access to said inlet (9);
said flap (10) further comprising:
- elastic means (30) interposed between said first element (21) and said second element (22) and configured to load said shutter (15) towards said first complete opening position; and
- slowing means (41, 100) configured to slow down said shutter (15) in the area of said first complete opening position;
**characterized in that** said slowing means (41, 100) comprise:
- a cover (41) carried by one (21) of said first and second element (21, 22); and
- a first surface (100) carried by the other one (22) of said first and second element (21, 22);
at least one of said cover (41) and said first surface (100) being made of a damping material;
said cover and said first surface (41, 100) interacting with one another at least in said complete opening position so as to slow down said shutter (15) upon reaching of said first complete open position.

2. The flap according to claim 1, **characterized in that** one (41) of said cover (41) and said first surface (100) is made of a polyvinyl chloride and the other one (100) of said cover (41) and said first surface (100) is made of a thermoplastic material.

3. The flap according to claim 1 or 2, **characterized in that** said cover (41) is made of a high-friction material.

4. The flap according to claim 2 or 3, **characterized in that** said cover (41) is carried by said first element (21) and said first surface (100) is carried by said second element (22).

5. The flap according to any one of the preceding claims, **characterized in that** said shutter (20) is movable between:
- said first closing position and a first partial opening position according to a first rotation stroke around said first axis (B) covering a first angle; and
- said first partial opening position and a complete opening position according to a second rotation stroke around said first axis (B) covering a second angle, which is consecutive to said first stroke;
said cover and said first surface (41, 100) being spaced apart from one another along said first stroke and interacting along said second stroke.

6. The flap according to claim 5, **characterized in that** said first stroke has a greater angular extension than said second stroke.

7. The flap according to any one of the preceding claims, **characterized in that** said second element (22) comprises, in turn:
- a first arm (51) projecting from an edge (23) of said shutter (15);
- a free end (54); and
- a second arm (52) interposed between said first arm (51) and said free end (54);
said first element (21) comprising a pair of walls (60), which are opposite one another relative to said first axis (B) and between which there are interposed, along said first axis (B), said second arm (52) and said free end (54);
one of the walls (60) comprising a second surface (80), on which said cover (41) is arranged;
said second arm (52) and/or said free end (54) being axially delimited by said first surface (100) arranged in the area of said second surface (80) parallel to said first axis (B).

8. The flap according to claim 7, **characterized in that** said first surface (100) is coplanar to said at least one of said walls (60).

9. A motor vehicle (1) comprising:
- a body (2) defining a passenger compartment (3);
- an inlet (9) defining a filling mouth of a tank or an electric charging port; and
- a flap (10) according to any one of the preceding claims;
- said first element (21) being fixed to said body (2).

10. The motor vehicle according to claim 9, **characterized in that** it comprises:
- at least one door (4, 5), which is movable between a second opening position, in which it allows access to said passenger compartment (3), and a second closing position, in which it forbids said access;
- a lock, which is movable between a third closing position, in which it prevents said door (4, 5) from moving from said second closing position to said second opening position, and a third opening position, in which it allows said door (4, 5) to move from said second closing position to said second opening position; and
- a closing mechanism, which can be operated to prevent said flap (10) from moving between said first closing position and said first complete opening position, when said lock is in said third closing position.
